# EUROPÄISCHE PATENTSCHRIFT

(11) **EP 0 528 373 B1**
(45) Veröffentlichungstag und Bekanntmachung des Hinweises auf die Patenterteilung: **27.03.1996**
(21) Anmeldenummer: 92113896.2
(22) Anmeldetag: 14.08.1992
(51) Int. Cl.: B26D 3/28, H05K 3/00

(54) **Abziehvorrichtung für eine auf einem Trägermaterial auflaminierte Folie**
Apparatus for peeling off a film, laminated to a carrier-material
Dispositif pour enlever une feuille laminée sur un matériau support

(30) Priorität: 21.08.1991 DE 4127601
(43) Veröffentlichungstag der Anmeldung: 24.02.1993
(73) Patentinhaber: HOECHST AKTIENGESELLSCHAFT, D-65926 Frankfurt am Main (DE)
(72) Erfinder: Platzer, Stephan J. W., Dr., W-6228 Eltville-Erbach (DE); Hultzsch, Günter, Dr., W-6200 Wiesbaden (DE); Heist, Hans, W-6200 Wiesbaden (DE); Stork, Martin, W-6052 Mühlheim/Main (DE); Procter, Arthur E., Long Valley, N.J. (US)

(56) Entgegenhaltungen:
- DE-A- 2 634 560
- US-A- 4 553 191
- US-A- 4 752 346

## Beschreibung

Die Erfindung betrifft eine Abziehvorrichtung für eine auf einem Trägermaterial auflaminierte Folie, mit einer Plattform, über die das Laminat aus Folie und Trägermaterial geführt ist, und eine Trennvorrichtung, die ein längliches Abzugselement aufweist, das sich parallel und in einem bestimmten Abstand über die Breite der Plattformoberfläche erstreckt.

Lichtempfindliche Schichten oder Lagen, wie beispielsweise belichtete Fotoresistschichten auf Leiterplatten oder Farbprüffolien, sind im allgemeinen durch Schutzfolien abgedeckt. Bei der Herstellung von Farbprüffolien und gedruckten Leiterplatten wird ein Substrat zuerst mit einem lichtempfindlichen Material beschichtet. Anschließend wird das Material mit einer durchsichtigen Folie abgedeckt. Dieses Laminat aus Folie und lichtempfindlicher Schicht wird dann bildweise durch eine Maske belichtet. Diese Belichtung bewirkt eine bildformende, unterschiedliche Adhäsion der fotoempfindlichen Schicht in der Weise, daß die belichteten Teile mit einer stärkeren Adhäsion auf der Folie haften als die unbelichteten Teile. Wenn die Schutzfolie und das Substrat voneinander getrennt werden, befindet sich beispielsweise ein Positivbild auf dem Substrat und ein Negativbild auf der Schutzfolie.

Bei der Herstellung von Leiterplatten für elektrische Schaltungen wird das Substrat mit einem lichtempfindlichen Trockenresistfilm laminiert. Mit Hilfe einer die elektrische Schaltung darstellenden Abbildungsmaske erfolgt die Belichtung des Trockenresistfilms, und danach wird die Schutzfolie entfernt und der Trockenresistfilm in verschiedenen Verarbeitungsschritten entwickelt. Die Schutzfolie auf dem Trockenresistfilm ermöglicht eine weitgehende staubfreie Belichtung und den Transport der beschichteten Leiterplatten im gestapelten Zustand. Die Leiterplatten weisen im einzelnen einen oder mehrere Ränder auf, die frei von der auflaminierten Schutzfolie sind, so daß die Platte an diesen freien Rändern von Greifwerkzeugen oder manuell erfaßt werden kann.

Bei einigen Laminiervorgängen ist es erwünscht, eine Beschichtung von einer Oberfläche zu einer anderen Oberfläche vollständig zu übertragen, wie diese beispielsweise bei einer Übertragung einer gefärbten Harzschicht von einem Substrat auf ein Empfangsblatt der Fall ist. In einem solchen Fall werden das beschichtete Substrat und ein darauf gelegtes Empfangsblatt durch einen Laminierspalt von beheizten Laminierwalzen unter Druck hindurchgeführt. Anschließend werden das Substrat und das Empfangsblatt voneinander getrennt und dabei die gefärbte Harzschicht von dem Substrat auf das Empfangsblatt übertragen. Ein Problem bei derartigen Übertragungsverfahren besteht in der Unvollständigkeit der Übertragung der gefärbten Harzschicht.

Das US-Patent 4,752,346 beschreibt eine Vorrichtung und ein Verfahren zum Ablösen und Trennen von aufeinanderklebenden Folien. Die Vorrichtung umfaßt eine Plattform aus einem Metall oder aus einem Material, dessen Oberfläche mit einer elektrisch leitenden Schicht ausgestattet ist. Über der Oberfläche befindet sich eine Leistenkante oder ein Keil. Sowohl die Leistenkante als auch die Plattformoberfläche sind elektrisch geerdet. Die Leistenkante ist über der Plattform mittels Stützen an jedem Ende der Leistenkante positioniert. Die Stützen, die von Federn umgeben sind, sind durch die Leistenkante hindurchgeführt und ragen über diese vor. Somit ist es möglich, daß zwischen der Unterseite der Leistenkante und der Oberfläche der Plattform ein variabler Spalt sich ausbilden kann, der es ermöglicht, daß unterschiedlich dicke Laminate aus Substrat und Folie zwischen der Leistenkante und der Oberfläche der Plattform hindurchgeführt werden können. So wird beispielsweise auf eine transparente Polyesterfolie mittels einer Kleberschicht eine gefärbte fotoempfindliche Schicht aufgebracht, die von einem Empfangsblatt abgedeckt ist. Diese Sandwich-Anordnung durchläuft den Spalt von Laminierwalzen und wird anschließend zwischen der Leistenkante und der Plattform der Abzugsvorrichtung eingeführt. Die transparente Polyesterfolie wird über die Leistenkante abgezogen, indem die Folie über den Kantenwinkel geknickt nach oben entlang der Schräge der Leistenkante geführt wird. Dadurch wird die Polyesterfolie von dem Empfangsblatt beziehungsweise der Empfangsfolie getrennt, und es erfolgt eine Übertragung der Kleber- und der gefärbten fotoempfindlichen Schicht auf das Empfangsblatt.

Aus der DE-OS 34 43 939 ist ein Verfahren zum Entfernen der Schutzfolie von mit belichtetem Fotoresist laminierten Leiterplatten mit Hilfe eines flächenförmigen Haftelements bekannt, das auf die zu entfernende Schutzfolie geklebt und anschließend im wesentlichen Übereck von der Leiterplatte gezogen wird. Dabei wird die Leiterplatte durch eine Verdrehvorrichtung so justiert, daß sich zwischen der Vorderkante der Platte und der Normalen zur Transportrichtung ein Winkel von 0 ° < α <90 ° einstellt. Anschließend wird das vordere Eck der Platte sowohl ober- als auch unterseitig derart mit einem zweiseitig klebenden Haftelement versehen, daß über den Rand der Schutzfolie hinaus auch Teile der unbedeckten Platte erfaßt werden und die Schutzfolie mittels Walzen abgezogen werden kann. Die Vorrichtung zur Durchführung des Verfahrens umfaßt eine Transport- und Justiereinrichtung, durch welche der plattenförmige Körper aus seiner Transportrichtung in eine Arbeitsposition schwenkbar ist, desweiteren eine Einrichtung zum Auftragen eines zweiseitig klebenden Haftelements, das zangenförmig ausgebildet ist und plattenförmige Körper zur Aufnahmen von Lagerrrollen aufweist und eine Einrichtung zum Entfernen des Haftelements und der mit diesem verbundenen Schutzfolie des plattenförmigen Körpers. Diese Einrichtung weist achsparallel angeordnetes Walzensystem mit einer Einrichtung zur Konstanthaltung des Walzenabstandes auf.

Aus der DE-OS 33 39 723 ist ein Verfahren und eine Vorrichtung zum Ablösen der Schutzfolie von laminierten Leiterplatten bekannt, bei dem die laminierten Leiterplatten über Transportrollen laufend an der Ober- und Unterseite mit einem einseitig beleimten Klebeband versehen werden, wobei durch ein anschließendes Abziehen des aufgebrachten Klebebandes über eine Leistenkante, welche mit der Leiterplatte einen Abziehspalt bildet, die Schutzfolie abgelöst, abtransportiert und gespeichert wird. Die Leistenkante bildet zur Transportvorrichtung einen Winkel von 45° und die sich anschließende Fläche zur Plattenebene ebenfalls einen Winkel von 45°.

Bei den bekannten Vorrichtungen zum Ablösen einer Schutzfolie von einer laminierten Leiterplatte werden entweder ein kontinuierliches beziehungsweise endloses Klebeband oder einzelne, doppelseitig klebende Elemente verwendet, wodurch zusätzliches Material und erhebliche Materialmengen davon benötigt werden. Ferner sind vorab weitere Verfahrensschritte erforderlich, um entweder das Klebeband oder die Klebeelemente auf die Schutzfolie der Leiterplatte aufzubringen.

Aufgabe der Erfindung ist es, hier Abhilfe zu schaffen und eine Vorrichtung mit geringem horizontalen Platzbedarf sowohl im Betriebs- als auch im Lagerungszustand vorzuschlagen, bei der ohne Klebeband oder Klebeelement ein sicheres vollständiges Ablösen einer Folie von einem Trägermaterial, auf dem eine oder mehrere lichtempfindliche Schichten aufgebracht sind, erfolgt.

Diese Aufgabe wird in einer Vorrichtung nach dem Oberbegriff des Anspruchs 1 in der Weise gelöst, daß eine Bodenplatte vorhanden ist, daß die Plattform unter einem Vertikal- zu Horizontalverhältnis kleiner/gleich 10:1 zu der horizontalen Bodenplatte geneigt und durch einen Querspalt zweigeteilt ist, und daß auf der Vorder- oder Rückseite der Plattform im Bereich des Querspalts zwischen der Trennvorrichtung und der Plattform ein Halteelement angeordnet ist, das durch den Querspalt hindurch oder nahe dem Querspalt eine Abwärtsbewegung des Laminats, das sich in dem Spalt zwischen der Trennvorrichtung und der Plattform befindet, durch selbsttätiges Festklemmen des Laminats im Spalt blockiert.

In Ausgestaltung der Erfindung ist das Abzugselement eine Leistenkante bzw. ein Keil, deren bzw. dessen obere Kante abgerundet ist.

In Weiterbildung der Erfindung ist die Plattform oder die Bodenplatte der Abziehvorrichtung geerdet.

Die weitere Ausgestaltung der Erfindung ergibt sich aus den Patentansprüchen 4 bis 22.

Im folgenden wird die Erfindung anhand der Zeichnungen näher erläutert. Es zeigen:
- Figur 1: eine Seitenansicht einer ersten Ausführungsform einer Vorrichtung nach der Erfindung,
- Figur 2: eine Vorderansicht der Vorrichtung nach Figur 1,
- Figur 3: eine perspektivische Seitenansicht eines Elements der Vorrichtung nach der Erfindung,
- Figur 4: in Seitenansicht das Ablösen einer Folie von einem Trägermaterial durch eine Trennvorrichtung,
- Figur 5: eine Seitenansicht einer zweiten Ausführungsform der Vorrichtung nach der Erfindung,
- Figur 6: eine Vorderansicht der Vorrichtung nach Figur 5,
- Figur 7: in vergrößerter Seitenansicht ein Element der Vorrichtung nach Figur 5, und
- Figur 8: in Seitenansicht die Vorrichtung im zusammengeklappten Zustand.

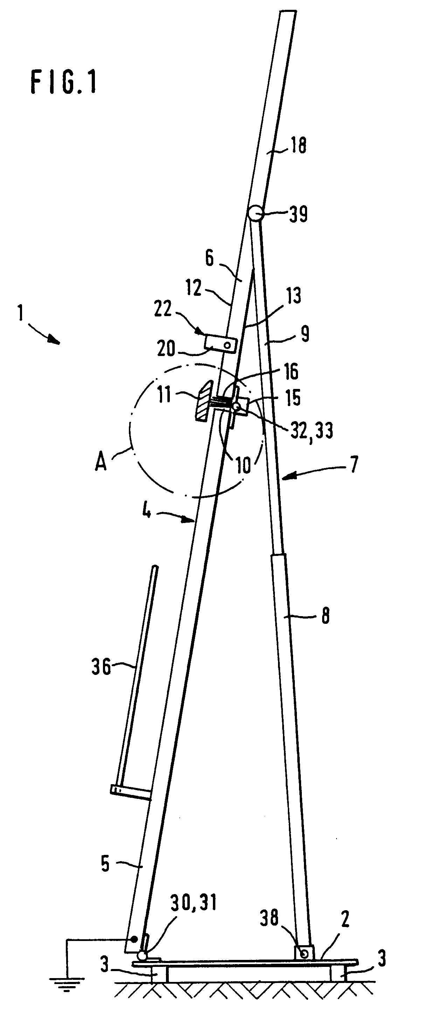

In Figur 1 ist eine erste Ausführungsform einer Abziehvorrichtung 1 zum Trennen und Abziehen einer Folie oder eines sonstigen Materials, wie Papier, Metallfolie, von einem Trägermaterial schematisch in Seitenansicht dargestellt. Die Abziehvorrichtung 1 besteht aus einer Bodenplatte 2, die sich auf vier Füßen 3, beispielsweise Gummifüßen, an den Ecken der Bodenplatte abstützt, einer schrägen Plattform 4, einer Trennvorrichtung 11 und zwei Abstützungen 7, je eine an jeder Längsseitenkante der Plattform 4.

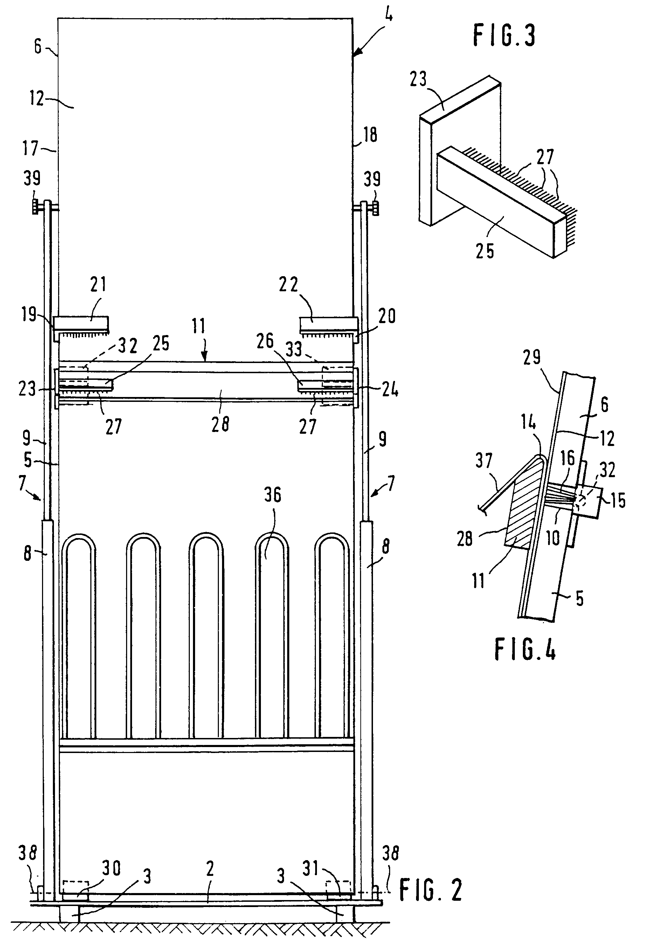

Die Trennvorrichtung 11 ist parallel zu der Plattform 4 in einem bestimmten Abstand zu der Plattformvorderseite 12 angeordnet und besitzt eine abgerundete obere Kante 14, wie aus Figur 4 zu ersehen ist. In den Spalt zwischen der Plattform 4 und der Trennvorrichtung 11 wird das Laminat aus dem Trägermaterial 37 und der Folie 29 eingeschoben. Die Trennvorrichtung 11 deckt einen Querspalt 10 der Plattform 4, wie aus den Figuren 1 und 2 ersichtlich ist, ab. Die Plattform 4 ist unter einem Vertikal- zu Horizontalverhältnis kleiner/gleich 10:1 zu der horizontalen Bodenplatte 2 geneigt. Insbesondere hat sich ein Verhältnis von 7:1 bewährt. Wird die Plattform 4 gegenüber der horizontalen Bodenplatte 2 steiler gestellt, als dem Verhältnis 10:1 entspricht, so ergeben sich Schwierigkeiten beim Abziehen der auflaminierten Folie 29 von dem Trägermaterial 37 mit Hilfe der Trennvorrichtung 11, da dann das Laminat dazu neigt, sich von der Plattform während der Aufwärtsbewegung bogenförmig wegzubiegen.

Das Trägermaterial 37 kann eine Folie sein, auf der beispielsweise eine gefärbte, lichtempfindliche Kunstharzschicht aufgebracht ist. Die darüber laminierte Folie 29 dient dann als Empfangsfolie für diese gefärbte Kunstharzschicht, die im allgemeinen eine Polymerschicht ist, in der ein entsprechender Farbstoff eingearbeitet ist. Beim Ablösen und Trennen der Folie 29 von dem Trägermaterial 37 wird dann die gefärbte Kunstharzschicht von dem Trägermaterial auf die empfangende Folie 29 übertragen. Im Anschluß daran kann dann die Belichtung dieser so erhaltenen Farbprüffolie erfolgen. Ebenso ist es möglich, die Farbprüffolie schon vor dem Ablösen zu belichten.

Als Trägermaterial 37 kommt auch eine Leiterplatte mit aufbelichtetem Fotoresistmuster in Betracht, die Folie 29 ist dann eine Schutzfolie für das aufbelichtete Fotoresistmuster. Nach dem Belichten der Leiterplatte wird die Schutzfolie entfernt und das Fotoresistmuster in verschiedenen Bädern entwickelt. Die Schutzfolie muß entfernt werden, ohne daß es zu Beschädigungen des Fotoresistmusters kommt und/oder ohne daß Reste der Schutzfolie auf dem Fotoresistfilm verbleiben. Die Plattform 4 oder die Bodenplatte 2 der Abziehvorrichtung 1 sind geerdet, so daß die während des Abziehvorgangs der Folie 29 von dem Trägermaterial 37 entstehenden elektrischen Ladungen von der Folie 29, die mit der Plattform 4 in Berührung steht, gegen Masse abgeleitet werden können.

Die Plattform 4 ist mit Hilfe zweier Scharniere 30, 31, die nahe der unteren Kante der Plattform angebracht sind, mit der Bodenplatte 2 verbunden und kann um diese Scharniere um einen bestimmten Winkel geschwenkt werden, so daß unterschiedliche Schrägstellungen der Plattform 4 gegenüber der horizontalen Bodenplatte 2 einstellbar sind. Die Abstützung 7 ist einerseits an der Bodenplatte 2 und andererseits an einer Seitenkante 18 der Plattform 4 mittels einer Schraube 39 befestigt.

Auf der Rückseite 13 der Plattform 4 ist eine Bürste 15 angeordnet, deren Borsten 16 den Querspalt 10 durchdringen und mit ihren Spitzen an der Rückseite der Trennvorrichtung 11 anliegen. Wird das Laminat aus Trägermaterial 37 und der auflaminierten Folie 29 in den Spalt zwischen der Trennvorrichtung 11 und der Plattform 4 eingeschoben, so drücken die Borsten 16 der Bürste 15 im Querspalt gegen die auf der Vorderseite 12 der Plattform 4 anliegende Rückseite des Trägermaterials 37 und lassen nur eine Aufwärtsbewegung des Laminats zu. Die Borsten 16 sind so ausgerichtet, daß sie einer Abwärtsbewegung des Laminats entlang der schrägen Plattform 4 einen ausreichend großen Widerstand entgegensetzen, so daß das Laminat in dem Spalt zwischen der Trennvorrichtung 11 und der Plattform 4 selbsttätig festgeklemmt ist.

Wie Figur 2 zeigt, befindet sich im unteren Teil 5 der Plattform 4 ein Korb 36 für die Aufnahme von Laminaten, die entlang der Vorderseite der Plattform in den Spalt zwischen Trennvorrichtung 11 und der Plattform 4 nach oben geschoben werden. Der Korb 36 besteht beispielsweise aus voneinander beabstandeten gebogenen Metallstäben, die zu einem langgezogenen U geformt sind.

Oberhalb der Trennvorrichtung 11 befinden sich an den beiden Seitenkanten 17, 18 der Plattform 4 je ein Winkel 19, 20, der eine elektrisch leitende Entladungsbürste 21, 22 trägt, die mit ihren Borsten an der Vorderseite 12 der Plattform 4 anliegt. Die Borsten der Entladungsbürsten 21, 22 erstrecken sich über eine Querstrecke von 150 bis 200 mm und berühren nach dem Abzug der Folie 29 von dem Trägermaterial 37 die Vorderseite der sich nach oben bewegenden Folie 29. Bei dem Trägermaterial 37 handelt es sich im allgemeinen gleichfalls um eine Folie, von der beispielsweise eine gefärbte Polymermasse auf die Folie 29 als Empfangsblatt während des Trennvorgangs übertragen wird. Die Winkel 19, 20 sind beispielsweise schwenkbar an den beiden Seitenkanten 17, 18 der Plattform 4 angebracht, so daß die Winkel nach Bedarf so weit verschwenkt werden können, daß die Borsten der Entladungsbürsten 21, 22 die Folie 29 entweder unter einem rechten Winkel oder unter einem hiervon geringfügig abweichenden Winkel berühren. Die Winkel 19, 20 können selbstverständlich auch fest an den Seitenkanten 17, 18 der Plattform 4 angebracht sein. Die Borsten der Entladungsbürsten 21, 22 schließen einen rechten Winkel mit dem Winkelschenkel ein, auf dem sie angebracht sind. Ebenso ist es möglich, daß anstelle der beiden Entladungsbürsten 21, 22 eine über die Breite der Plattform durchgehende einzelne Entladungsbürste vorgesehen ist.

Im Bereich der Trennvorrichtung 11 befinden sich an beiden Seitenkanten 17, 18 der Plattform 4 weitere Winkel 23, 24, von denen jeder eine elektrisch leitende Entladungsbürste 25, 26 trägt (vgl. Fig. 3). Die Borsten dieser Entladungsbürsten schließen einen rechten Winkel mit dem Winkelschenkel ein, auf dem sie befestigt sind. Die Borstenspitzen 27 dieser Entladungsbürsten 25, 26 liegen an der von der Plattform 4 wegweisenden Seite 28 der Trennvorrichtung 11 an oder haben von dieser Seite einen so geringen Abstand, daß das über die Trennvorrichtung 11 abgezogene und entlang der Seite der Trennvorrichtung 11 geführte Trägermaterial 37 in Kontakt mit den Borstenspitzen 27 steht. Die Borsten der elektrisch leitenden Entladungsbürsten 25, 26 bestehen bevorzugt aus rostfreien Stahldrähten. Durch den Kontakt der Borstenspitzen 27 der Entladungsbürsten 25, 26 mit dem Trägermaterial 37 werden die durch den Abziehvorgang sich ausbildenden elektrostatischen Ladungen gegen Masse abgeführt, da, wie schon zuvor erwähnt wurde, entweder die Plattform 4 oder die Bodenplatte 2 der Abziehvorrichtung 1 geerdet ist.

Das Detail A der Figur 1 ist in Figur 4 im vergrößerten Maßstab dargestellt. Wie aus dieser Darstellung ersichtlich ist, bildet die Trennvorrichtung 11 eine Leistenkante, deren obere Kante 14 abgerundet ist. In einer weiteren, nicht gezeigten Ausführungsform besteht die Trennvorrichtung aus einem Keil, dessen Oberkante gleichfalls abgerundet ist. Sobald das Laminat aus Trägermaterial 37 und Folie 29 die obere Kante 14 der Leistenkante bzw. der Trennvorrichtung 11 erreicht hat, wird das Trägermaterial 37 entweder manuell oder mittels Greifer über die abgerundete Kante 14 von der Folie 29 schräg nach unten abgezogen. Die Folie 29 bewegt sich bei diesem Vorgang weiterhin entlang der Vorderseite 12 der Plattform 4 nach oben, so lange, bis das Trägermaterial 37 vollständig von der Folie 29 abgezogen ist. Anschließend kann die als Empfangsblatt dienende Folie 29 weiterverarbeitet werden.

Jede der beiden Abstützungen 7 ist über ein Drehgelenk 38 mit der Bodenplatte 2 verbunden, wie aus Figur 2 zu ersehen ist. Die einzelne Abstützung besteht aus einem oberen Abschnitt 9 und einem unteren Abschnitt 8, wobei der obere Abschnitt 9 einen kleineren Querschnitt als der untere Abschnitt 8 aufweist. Zweckmäßigerweise handelt es sich bei dieser Abstützung 7 um eine teleskopartig ausgebildete Abstützung, ähnlich einem Teleskop-Bremsstab, wie er beispielsweise für die Abstützung von Kofferraumdeckeln von Autos verwendet wird.

Die Plattform 4 ist zweigeteilt im Bereich des Querspalts 10 und besteht aus einem unteren Teil 5 und einem oberen Teil 6, die miteinander durch Scharniere 32, 33 verbunden sind. Die Scharniere 32, 33 befinden sich nahe dem Querspalt 10. Der obere Teil 6 kann bei Bedarf, insbesondere dann, wenn die Abziehvorrichtung 1 transportiert werden soll, an den unteren Teil 5 angeklappt werden. Hierzu werden die beiden Schrauben 39 gelöst, mit denen die Abstützungen 7 an den Seitenkanten 17, 18 der Plattform 4 befestigt sind. Während des Umklappens des oberen Teils 6 der Plattform kann gleichzeitig der obere Abschnitt 9 der Abstützung 7 teleskopartig in den unteren Abschnitt 8 hineingeschoben werden. Da die Abstützung 7 über das Drehgelenk 38 auf der Bodenplatte 2 befestigt ist, weist die Abstützung 7 während des Zusammenklappens der Abziehvorrichtung 1 einen entsprechenden Freiheitsgrad auf, so daß sie um das Drehgelenk 38 so weit geschwenkt werden kann, daß das Zusammenklappen der Plattform 4 und das teleskopartige Einfahren der Abstützung 7 problemlos ausgeführt werden können.

Das Abtrennen und Abziehen der Folie von dem Trägermaterial sowie des Trägermaterials von der Folie läuft wie folgt ab:
Das Laminat, bestehend aus der Folie 29 und dem Trägermaterial 37, wird aus dem Korb 36 entnommen und in den Spalt zwischen der Trennvorrichtung 11 und der Vorderseite 12 der Plattform 4 so weit eingeschoben, bis die Oberkante des Laminats oberhalb der oberen Kante 14 der Trennvorrichtung 11 liegt. In dieser Position wird das Laminat durch die Borsten 16 der Bürste 15 im Bereich des Querspalts 10 gegen die Rückseite der Trennvorrichtung 11 gepreßt und festgehalten. Das Trägermaterial 37 bzw. die Trägerfolie wird an der Vorderkante von der Folie 29 losgelöst und über die abgerundete obere Kante 14 der Trennvorrichtung 11 abgewinkelt und schräg nach unten entweder manuell oder mittels Greiferleisten gezogen. Dabei wird von der Trägerfolie das belichtete gefärbte Polymermaterial auf die Folie 29 übertragen, die beispielsweise ein Positivbild empfängt, während auf der Trägerfolie ein Negativbild erhalten bleibt. Während des Abziehens des Trägermaterials 37 bewegt sich das Laminat entlang der Plattform 4 weiterhin nach oben. Nach vollständigem Abzug des Trägermaterials 37 von der bildempfangenden Folie 29 kann die letztere weiteren Bearbeitungsschritten zugeführt werden.

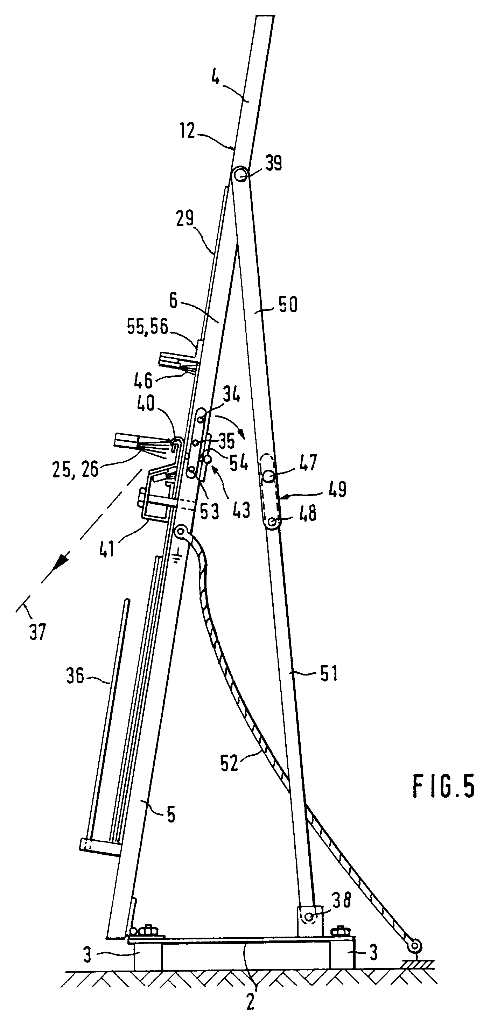

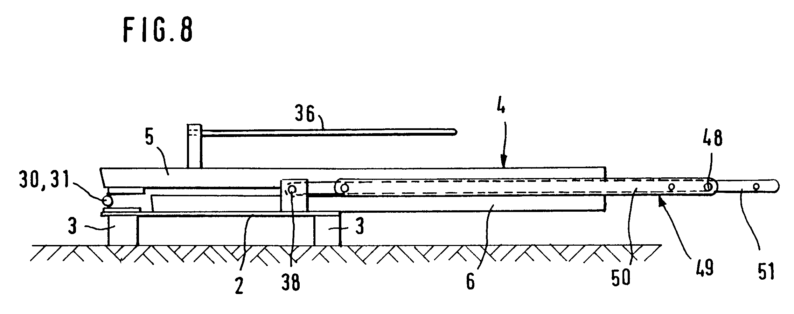

In Figur 5 ist eine zweite Ausführungsform der Abziehvorrichtung 1 in Seitenansicht gezeigt. Gleiche Bauteile, wie sie in der ersten Ausführungsform verwendet wurden, sind mit den gleichen Bezugszahlen bezeichnet. Die wesentlichen Unterschiede zu der ersten Ausführungsform bestehen darin, daß die Bürste 15, die eine Haltebürste für das Laminat ist, statt an der Rückseite nunmehr an der Vorderseite 12 der Plattform 4 angeordnet ist und zusammen mit einer Abzugskante 40 in einem Trenn-/Halteelement 41 untergebracht ist und daß die Abstützungen nicht teleskopartig, sondern umklappbar ausgebildet sind. Jede der beiden entlang den Seitenkanten der Plattform 4 angeordneten Abstützungen 49 weist etwa in der Mitte ein Gelenk 48 auf, über dem sich eine lösbare Schraube 47 befindet. Das obere Ende jeder Abstützung ist durch eine Schraube 39 mit der Plattform 4 verbunden, während das untere Ende über das Drehgelenk 38 an der Bodenplatte 2 befestigt ist. Nach dem Lösen der Schrauben 39, 47 wird der obere Abschnitt 50 der Abstützung 49 abgeklappt und kommt an dem unteren Abschnitt 51 der Abstützung zum Anliegen, wie dies in Figur 8 gezeigt ist.

Die Plattform 4 ist über ein biegsames abgeschirmtes Kabel 52 mit Masse verbunden.

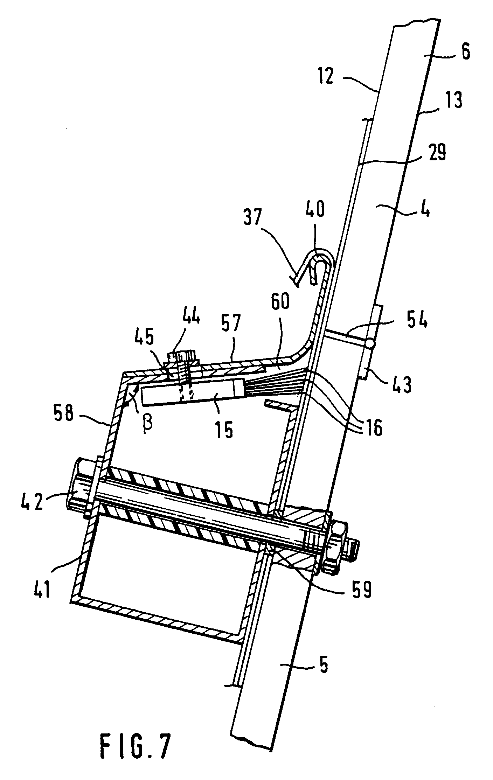

Ein Trenn-/Halteelement 41 ist im Abstand zu der Vorderseite der Plattform 4 nahe einem Gelenk 53 der Plattform 4 angeordnet. Ein Spalt 54 (siehe Figur 7) trennt den unteren Teil 5 von dem oberen Teil 6 der Plattform 4. Auf der Rückseite der Plattform 4 befindet sich auf der Höhe des Spaltes 54 ein über die Plattformbreite sich erstreckendes Scharnier 43, das die beiden Teile 5, 6 miteinander verbindet und das Abklappen des oberen Teils 6 auf den unteren Teil 5 ermöglicht, nachdem die Schraube 39 sowie Schrauben 34 und 35 des Gelenks 53 gelöst sind.

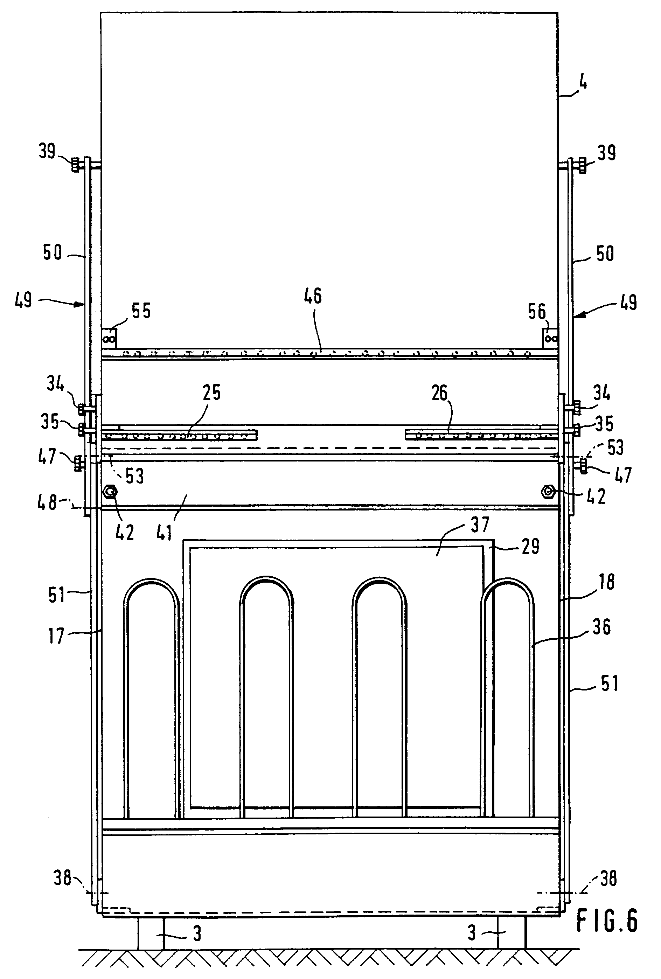

Oberhalb des Gelenks 53 ist auf der Vorderseite der Plattform 4 an zwei Winkeln 55, 56, wie aus Figur 6 zu entnehmen ist, eine durchgehende Entladungsbürste 46 angeordnet, die sich über die Breite der Plattform erstreckt und deren Borsten senkrecht auf die Plattform 4 gerichtet sind. Die Borstenspitzen stehen in Kontakt mit der Folie 29, die sich während der Abziehbewegung nach oben schiebt. Die Winkel 55, 56 sind zweckmäßigerweise mit der Vorderseite der Plattform 4 verschraubt und können nach dem Lösen der Schraubverbindung zusammen mit der Entladungsbürste 46 von der Plattform 4 abgenommen werden. Die auf der Höhe der Schrauben 35 liegenden Entladungsbürsten 25, 26 sind in der gleichen Weise ausgebildet und an der Plattform 4 befestigt, wie bei der ersten Ausführungsform der Vorrichtung, so daß sie nicht nochmals beschrieben werden. Die Winkel 23, 24 dieser Entladungsbürsten 25, 26 sind gleichfalls lösbar mit der Plattform 4 verschraubt.

Die Vorderansicht der Plattform 4 in Figur 6 läßt die Anordnung der Entladungsbürsten 25, 26 und 46 erkennen. Im Korb 36 befinden sich die Laminate, deren Trägermaterial 37 von der Folie 29 abgetrennt wird.

In Figur 7 ist vergrößert das Trenn-/Halteelement 41 im Schnitt dargestellt, das aus einem kastenähnlichen Hohlprofil mit im wesentlichen rechteckigem Querschnitt besteht, wobei eine obere Profilseite 57 einen Winkel β > 90 ° mit ihrer angrenzenden Profilseite 58 einschließt und in dem kastenähnlichen Profil eine Öffnung 60 freiläßt. Nach oben hin ist die obere Profilseite 57 verlängert und so gebogen, daß der gebogene Teil parallel zu der schrägen Plattform 4 verläuft. Den Abschluß bildet eine abgerundete Abzugskante 40, über die während des Abziehvorgangs das Trägermaterial 37 abgeknickt von der Vorderseite der Plattform 4 weggeführt wird.

Das Trenn-/Halteelement 41 erstreckt sich über die Breite der Plattform 4 und ist mit zwei, durch den Profilquerschnitt hindurchgeführten, gekonterten Schrauben 42 mit der Plattform 4 derart verschraubt, daß sich zwischen der Vorderseite der Plattform 4 und der daran angrenzenden Profilseite je eine Unterlegscheibe 59 auf den Schrauben 42 befindet, die für einen Spalt von 3 bis 5 mm zwischen der Plattform und dem Trenn-/Halteelement sorgen. Im Inneren des Trenn-/Halteelements 41 ist auf der Innenseite der oberen Profilseite die Bürste 15 angeordnet, deren Borsten 16 durch die Öffnung 60 des Profils sich erstrecken und gegen das Laminat aus Folie 29 und Trägermaterial 37 anliegen und dieses festhalten, so daß es nicht nach unten über die schräge Plattform abrutschen kann, wenn z.B. die Abziehbewegung gestoppt wird oder beendet ist. In der oberen Profilseite 57 befindet sich ein Langloch 45, das von einer Feststellschraube 44 für die Bürste 15 durchdrungen ist. Die Feststellschraube 44 kann entsprechend der gewünschten Position der Bürste 15 innerhalb des Langloches 45 jede beliebige Stellung einnehmen. Durch diese Verstellmöglichkeit der Bürste 15 können unterschiedlich dicke Laminate berücksichtigt werden, da auch für dünnere Laminate der Kontakt mit den Borsten 16 sichergestellt ist.

Der Abziehvorgang verläuft in ähnlicher Weise wie schon anhand der ersten Ausführungsform der Vorrichtung beschrieben wurde, so daß eine nochmalige Beschreibung des Vorgangs nicht erfolgt.

In Figur 8 ist die zweite Ausführungsform der Vorrichtung im zusammengeklappten Zustand dargestellt. Um das Zusammenklappen vornehmen zu können, werden zunächst die Schrauben 39 und 47 gelöst, so daß die Abstützungen 49 um das Gelenk 48 im Uhrzeigersinn abgeklappt werden können. Der obere Abschnitt 50 liegt dann an dem unteren Abschnitt 51 an, der um das Drehgelenk 38 verschwenkbar ist. Es werden desweiteren die Entladungsbürsten 25, 26 und 46 von der Vorderseite der Plattform 4 abgeschraubt und die Schrauben 34 und 35 oberhalb des Gelenks 53 gelöst. Desweiteren wird das Trenn-/Halteelement 41 durch Lösen der Schrauben 42 von der Plattform 4 getrennt. Anschließend wird der obere Teil 6 der Plattform 4 um das Scharnier 54 im Uhrzeigersinn an den unteren Teil 5 der Plattform 4 angeklappt. Sowohl die zusammengeklappten Abstützungen 49 als auch die zusammengeklappte Plattform 4 werden anschließend im Uhrzeigersinn bis zum Aufliegen auf der Bodenplatte 2 umgeklappt, wie dies in Figur 8 gezeigt ist. Das Volumen der zusammengeklappten Abziehvorrichtung 1 ist gegenüber dem Betriebszustand der Abziehvorrichtung wesentlich verkleinert, so daß die Abziehvorrichtung 1 für den Transport geringes Volumen einnimmt und wesentlich leichter zu handhaben ist als im aufgebauten Zustand.

## Patentansprüche

1. Abziehvorrichtung für eine auf einem Trägermaterial (37) auflaminierte Folie (29), mit einer Plattform (4), über die das Laminat aus Folie und Trägermaterial geführt ist, und einer Trennvorrichtung (11, 41), die ein längliches Abzugselement aufweist, das sich parallel und in einem bestimmten Abstand über die Breite der Plattformoberfläche erstreckt, dadurch gekennzeichnet, daß eine Bodenplatte (2) vorhanden ist, daß die Plattform (4) unter einem Vertikal- zu Horizontalverhältnis kleiner/gleich 10:1 zu der horizontalen Bodenplatte (2) geneigt ist und durch einen Querspalt (10, 54) zweigeteilt ist und daß auf der Vorder- oder Rückseite (12 bzw. 13) der Plattform (4) im Bereich des Querspalts zwischen der Trennvorrichtung (11, 41) und der Plattform (4) ein Halteelement (15) angeordnet ist, das durch den Querspalt hindurch oder nahe dem Querspalt eine Abwärtsbewegung des Laminats, das sich in dem Spalt zwischen der Trennvorrichtung und der Plattform befindet, durch selbsttätiges Festklemmen des Laminats im Spalt blockiert.

2. Abziehvorrichtung nach Anspruch 1, dadurch gekennzeichnet, daß das Abzugselement (11) eine Leistenkante bzw. ein Keil ist, deren bzw. dessen obere Kante (14) abgerundet ist.

3. Abziehvorrichtung nach Anspruch 1, dadurch gekennzeichnet, daß die Plattform (4) oder die Bodenplatte (2) der Abziehvorrichtung (1) geerdet ist.

4. Abziehvorrichtung nach Anspruch 2, dadurch gekennzeichnet, daß die Leistenkante bzw. der Keil den Querspalt (10) abdeckt und daß das auf der Rückseite (13) der Plattform (4) angeordnete Halteelement eine Bürste (15) ist, deren Borsten (16) den Querspalt (10) durchdringen und mit ihren Spitzen an der Rückseite der Trennvorrichtung (11) anliegen.

5. Abziehvorrichtung nach Anspruch 1, dadurch gekennzeichnet, daß oberhalb der Trennvorrichtung (11) an beiden Seitenkanten (17, 18) der Plattform (4) je ein Winkel (19, 20) schwenkbar angeordnet ist, der eine elektrisch leitende Entladungsbürste (21; 22) trägt, deren Borsten die Vorderseite der Plattform über eine Querstrecke von 150 bis 200 mm berühren.

6. Abziehvorrichtung nach Anspruch 1, dadurch gekennzeichnet, daß im Bereich der Trennvorrichtung (11) an beiden Seitenkanten (17, 18) der Plattform (4) je ein Winkel (23; 24) angeordnet ist, der eine elektrisch leitende Entladungsbürste (25; 26) trägt, deren Borstenspitzen (27) an der von der Plattform wegweisenden Seite (28) der Trennvorrichtung (11) anliegen oder von dieser Seite einen so geringen Abstand haben, daß das über die Trennvorrichtung (11) abgezogene und entlang der Seite der Trennvorrichtung (11) geführte Trägermaterial (37) in Kontakt mit den Borstenspitzen (27) steht.

7. Abziehvorrichtung nach Anspruch 6, dadurch gekennzeichnet, daß die elektrisch leitenden Entladungsbürsten (25; 26) Borsten aus rostfreien Stahldrähten haben.

8. Abziehvorrichtung nach Anspruch 1, dadurch gekennzeichnet, daß die Plattform (4) mittels zweier Scharniere (30, 31) mit der Bodenplatte (2) verbunden ist und durch zwei Abstützungen (7; 49), die einerseits mit der Bodenplatte (2) und andererseits mit den Seitenkanten (17, 18) der Plattform (4) verbunden sind, in ihrer Schräglage gehalten ist.

9. Abziehvorrichtung nach Anspruch 1, dadurch gekennzeichnet, daß ein unterer und ein oberer Teil (5, 6) der Plattform (4) durch Scharniere (32, 33) im Bereich des Querspalts (10) miteinander verbunden sind und daß der obere Teil (6) an den unteren Teil (5) anklappbar ist.

10. Abziehvorrichtung nach Anspruch 8, dadurch gekennzeichnet, daß jede der beiden Abstützungen (7) aus einem unteren und oberen Abschnitt (8, 9) besteht, die teleskopartig ineinander verschiebbar sind nach dem Lösen von Schrauben (39), mit denen die oberen Enden der Abstützungen (7) an der Plattform (4) befestigt sind.

11. Abziehvorrichtung nach Anspruch 1, dadurch gekennzeichnet, daß an der Vorderseite (12) der Plattform (4) unterhalb des Querspalts (10; 54) ein Korb (36) für die Aufnahme von Laminaten angeordnet ist.

12. Abziehvorrichtung nach Anspruch 10, dadurch gekennzeichnet, daß der obere Abschnitt (9) der Abstützung (7) einen kleineren Querschnitt als der untere Abschnitt (8) aufweist und daß der obere Abschnitt in den unteren Abschnitt teleskopartig einschiebbar ist.

13. Abziehvorrichtung nach Anspruch 8, dadurch gekennzeichnet, daß jede der Abstützungen (7; 49) über ein Drehgelenk (38) mit der Bodenplatte (2) verbunden ist.

14. Abziehvorrichtung nach Anspruch 1, dadurch gekennzeichnet, daß die Trennvorrichtung (41) eine nach oben hin verlängerte und gebogene Profilseite (57) aufweist, daß der gebogene Teil der Profilseite parallel zu der schrägen Plattform (4) verläuft und in eine abgerundete Abzugskante (40) übergeht, die von der Vorderseite (12) der Plattform (4) wegführt und daß das Halteelement in Gestalt einer Bürste (15) im Inneren der Trennvorrichtung (41) angeordnet ist.

15. Abziehvorrichtung nach Anspruch 14, dadurch gekennzeichnet, daß das Trenn-/Halteelement (41) ein kastenähnliches Querschnittsprofil aufweist und mit zwei, durch das Profil hindurchgeführte gekonterte Schrauben (42) mit der Plattform (4) verschraubt ist, daß auf jeder Schraube (42) eine Unterlegscheibe (59) zwischen der Plattformvorderseite (12) und der daran angrenzenden Profilseite aufsitzt, um einen Spalt von 3 bis 5 mm zwischen Plattform (4) und Trenn-/Halteelement (41) zu bilden, und daß eine obere Profilseite (57) des Trenn-/Halteelements (41) einen Winkel β > 90° mit der angrenzenden Profilseite (58) einschließt und eine Öffnung (60) des Profils zu der Plattform (4) hin freiläßt.

16. Abziehvorrichtung nach Anspruch 15, dadurch gekennzeichnet, daß die obere Profilseite (57) gegenüber den anderen Profilseiten des Querschnittsprofils verlängert und gebogen ist.

17. Abziehvorrichtung nach Anspruch 15, dadurch gekennzeichnet, daß auf der Innenseite der oberen Profilseite (57) die Bürste (15) mittels einer Feststellschraube (44) befestigt ist, die ein Langloch (45) der oberen Profilseite (57) durchdringt und in dem Langloch (45) in einer wählbaren Position so festlegbar ist, daß die Borsten (16) der Bürste (15), die aus der Öffnung (60) herausragen, Kontakt mit Laminaten haben, die von Fall zu Fall unterschiedliche Dicken besitzen.

18. Abziehvorrichtung nach Anspruch 1, dadurch gekennzeichnet, daß der untere und der obere Teil (5, 6) der zweigeteilten Plattform (4) durch ein Gelenk (53) an jeder der beiden Seitenkanten (17, 18) miteinander verbunden sind, und daß Schrauben (34, 35) oberhalb des Gelenks (53) die Teile (5, 6) in ihrer ausgerichteten Lage zueinander fixieren.

19. Abziehvorrichtung nach Anspruch 18, dadurch gekennzeichnet, daß das Gelenk (53) mit den Schrauben (34, 35) im Bereich des Querspalts (54) angeordnet sind.

20. Abziehvorrichtung nach Anspruch 19, dadurch gekennzeichnet, daß im Bereich des Querspalts (54) auf der Rückseite (13) der Plattform ein Scharnier (43) den oberen und unteren Teil der Plattform (4) miteinander verbindet.

21. Abziehvorrichtung nach Anspruch 8, dadurch gekennzeichnet, daß jede der Abstützungen (49) aus einem oberen Abschnitt (50) und einem unteren Abschnitt (51) besteht, die durch ein Gelenk (48) miteinander verbunden sind, daß eine Schraube (47) oberhalb des Gelenks (48) die ausgerichteten Abschnitte in ihrer Lage festlegt und daß der obere Abschnitt (50) durch die Schraube (39) mit der Seitenkante (17; 18) der Plattform (4) verbunden ist.

22. Abziehvorrichtung nach Anspruch 1, dadurch gekennzeichnet, daß oberhalb des Trenn-/Halteelements (41) an der Plattformvorderseite (12) nahe den Seitenkanten (17, 18) je ein Winkel (55, 56) angeschraubt ist, und daß eine über die Plattformbreite durchgehende Entladungsbürste (46) mit ihren Enden an den Winkeln befestigt ist.

## Claims

1. A drawing-off apparatus for a film (29) laminated on a carrier material (37), having a platform (4) over which the laminate comprising film and carrier material is guided, and a separating apparatus (11, 41) which has an elongate draw-off element which extends parallel and at a certain distance over the width of the platform surface, wherein a base plate (2) is present, wherein the platform (4) is inclined at a vertical to horizontal ratio of less than/equal to 10:1 with respect to the horizontal base plate (2) and is divided into two by a transverse gap (10, 54) and wherein a holding element (15) is arranged on the front side or rear side (12 or 13) of the platform (4) in the region of the transverse gap between the separating apparatus (11, 41) and the platform (4), which holding element blocks a downward movement of the laminate, which is situated in the gap between the separating apparatus and the platform, through the transverse gap or close to the transverse gap by automatically clamping the laminate firmly in the gap.

2. The drawing-off apparatus as claimed in claim 1, wherein the separating apparatus (the draw-off element) (11) is a draw-off edge or a wedge, the upper edge (14) of which is rounded-off.

3. The drawing-off apparatus as claimed in claim 1, wherein the platform (4) or the base plate (2) of the drawing-off apparatus (1) is grounded.

4. The drawing-off apparatus as claimed in claim 2, wherein the draw-off edge or the wedge covers the transverse gap (10) and wherein the holding element arranged on the rear side (13) of the platform (4) is a brush (15), the bristles (16) of which penetrate the transverse gap (10) and bear with their tips against the rear side of the separating apparatus (11).

5. The drawing-off apparatus as claimed in claim 1, wherein above the separating apparatus (11) there is an angle (19,20) arranged on each of both side edges (17, 18) of the platform (4) in such a way that it can swivel, which angle bears an electrically conductive discharge brush (21; 22), the bristles of which touch the front side of the platform over a transverse distance of 150 to 200 mm.

6. The drawing-off apparatus as claimed in claim 1, wherein there is arranged in the region of the separating apparatus (11) on each of both side edges (17, 18) of the platform (4) an angle (23; 24), which bears an electrically conductive discharge brush (25; 26), the bristle tips (27) of which bear against the side (28) of the separating apparatus (11) facing away from the platform or are at such a small distance from this side that the carrier material (37) drawn off over the separating apparatus (11) and taken along the side of the separating apparatus (11) is in contact with the bristle tips (27).

7. The drawing-off apparatus as claimed in claim 6, wherein the electrically conductive discharge brushes (25; 26) have bristles of stainless steel wires.

8. The drawing-off apparatus as claimed in claim 1, wherein the platform (4) is connected to the base plate (2) by means of two hinges (30, 31) and is kept in its sloping position by two supports (7; 49), which are connected on the one hand to the base plate (2) and on the other hand to the side edges (17, 18) of the platform (4).

9. The drawing-off apparatus as claimed in claim 1, wherein a lower part and an upper part (5, 6) of the platform (4) are connected to each other by hinges (32, 33) in the region of the transverse gap (10) and wherein the upper part (6) can be folded against the lower part (5).

10. The drawing-off apparatus as claimed in claim 8, wherein each of the two supports (7) comprises a lower section and an upper section (8, 9), which can be displaced telescopically one in the other after releasing screws (39) by which the upper ends of the supports (7) are fastened to the platform (4).

11. The drawing-off apparatus as claimed in claim 1, wherein a basket (36) for receiving laminates is arranged on the front side (12) of the platform (4) underneath the transverse gap (10; 54).

12. The drawing-off apparatus as claimed in claim 10, wherein the upper section (9) of the support (7) has a smaller cross section than the lower section (8) and wherein the upper section can be pushed telescopically into the lower section.

13. The drawing-off apparatus as claimed in claim 8, wherein each of the supports (7; 49) is connected to the base plate (2) by means of a swivel joint (38).

14. The drawing-off apparatus as claimed in claim 1, wherein the separating apparatus (41) has a profile side (57) which is extended upward and bent, wherein the bent part of the profile side runs parallel to the sloping platform (4) and ends in a rounded-off draw-off edge (40) which leads away from the front side (12) of the platform (4) and wherein the holding element, in the form of a brush (15), is arranged in the interior of the separating apparatus (41).

15. The drawing-off apparatus as claimed in claim 14, wherein the separating/holding element (41) has a box-like cross-sectional profile and is screwed by two locked screws (42), led through the profile, to the platform (4), wherein on each screw (42) a shim (59) is seated between the platform front side (12) and the profile side adjacent thereto, in order to form a gap of 3 to 5 mm between platform (4) and separating/holding element (41), and wherein an upper profile side (57) of the separating/holding element (41) forms an angle β > 90° with the adjacent profile side (58) and leaves an opening (60) of the profile toward the platform (4).

16. The drawing-off apparatus as claimed in claim 15, wherein the upper profile side (57) is extended with respect to the other profile sides of the cross-sectional profile and bent.

17. The drawing-off apparatus as claimed in claim 15, wherein the brush (15) is fastened on the inner side of the upper profile side (57) by means of a set-screw (44), which penetrates an oblong hole (45) of the upper profile side (57) and can be fixed in the oblong hole (45) in a selectable position in such a way that the bristles (16) of the brush (15) which protrude from the opening (60) have contact with laminates which have different thicknesses from case to case.

18. The drawing-off apparatus as claimed in claim 1, wherein the lower part (5) and the upper part (6) of the two-part platform (4) are connected to each other by a joint (53) on each of the two side edges (17, 18), and wherein screws (34, 35) above the joint (53) fix the parts (5, 6) in their aligned position with respect to each other.

19. The drawing-off apparatus as claimed in claim 18, wherein the joint (53) with the screws (34, 35) are arranged in the region of the transverse gap (54).

20. The drawing-off apparatus as claimed in claim 19, wherein a hinge (43) connects the upper part and lower part of the platform (4) to each other in the region of the transverse gap (54) on the rear side (13) of the platform.

21. The drawing-off apparatus as claimed in claim 8, wherein each of the supports (49) comprises an upper section (50) and a lower section (51), which are connected to each other by a joint (48), wherein a screw (47) above the joint (48) fixes the aligned sections in their position and wherein the upper section (50) is connected to the side edge (17; 18) of the platform (4) by the screw (39).

22. The drawing-off apparatus as claimed in claim 1, wherein above the separating/holding element (41) there is an angle (55, 56) screwed on in each case to the platform front side (12) close to the side edges (17, 18), and wherein a continuous discharge brush (46) over the width of the platform is fastened by its ends to the angles.

## Revendications

1. Dispositif pour enlever une feuille laminée (29) sur un matériau support (37), comprenant un plateau (4), sur lequel se déplace le laminat formé par la feuille et le matériau support, et un dispositif de séparation (11, 41) qui présente un élément de détachement longitudinal, qui est disposé parallèlement et à une distance déterminée de la surface du plateau, caractérisé en ce que ledit dispositif de séparation comprend également une plaque d'assise (2), en ce que le plateau (4) est incliné sur la plaque d'assise (2) horizontale selon un rapport inférieur ou égal à 10:1 de la verticale par rapport à l'horizontale, et séparé en deux parties par une fente transversale (10, 54) et en ce que la face avant ou la face arrière (12 ou 13) du plateau (4) est munie dans la zone de la fente transversale, entre le dispositif de séparation (11, 41) et le plateau (4), d'un élément de maintien (15) destiné à bloquer, à travers la fente transversale ou à proximité de la fente transversale, un mouvement de recul du laminat se trouvant dans la fente entre le dispositif de séparation et le plateau, en provoquant un auto-blocage du laminat dans la fente.

2. Dispositif d'enlèvement selon la revendication 1, caractérisé en ce que l'élément de détachement (11) est muni d'une arête de détachement ou forme une cale dont l'arête supérieure (14) est arrondie.

3. Dispositif d'enlèvement selon la revendication 1, caractérisé en ce que le plateau (4) ou la plaque d'assise (2) du dispositif d'enlèvement (1) est relié à la terre.

4. Dispositif d'enlèvement selon la revendication 2, caractérisé en ce que l'arête de détachement ou la cale recouvre la fente transversale (10) et en ce que l'élément de maintien disposé sur la face arrière (13) du plateau (4) forme une brosse (15), dont les poils (16) s'engagent dans la fente transversale (10) jusqu'à ce que leurs extrémités viennent en contact avec la face arrière du dispositif de séparation (11).

5. Dispositif d'enlèvement selon la revendication 1, caractérisé en ce que, au-dessus du dispositif de séparation (11), les deux arêtes latérales (17, 18) du plateau (4) sont munies chacune d'une cornière (19, 20) pivotante, qui porte une brosse de décharge (21 ; 22) conductrice d'électricité, dont les poils sont en contact avec la face avant du plateau sur une distance transversale de 150 à 200 mm.

6. Dispositif d'enlèvement selon la revendication 1, caractérisé en ce que, dans la zone du dispositif de séparation (11), les deux arêtes latérales (17, 18) du plateau (4) sont munies chacune d'une cornière (23 ; 24) pivotante, qui porte une brosse de décharge (25 ; 26) conductrice d'électricité, dont les extrémités des poils (27) sont en contact avec la face (28), opposée au plateau, du dispositif de séparation (11) ou sont si faiblement écartées de cette face qu'elles sont en contact avec le matériau support (37) qui se déplace le long de cette face du dispositif de séparation (11) et qui est retiré par le dispositif de séparation (11).

7. Dispositif d'enlèvement selon la revendication 6, caractérisé en ce que les brosses de décharge (25 ; 26) conductrices d'électricité ont des poils en forme de fils d'acier inoxydables.

8. Dispositif d'enlèvement selon la revendication 1, caractérisé en ce que le plateau (4) est relié à la plaque d'assise (2) par l'intermédiaire de deux charnières (30, 31) et maintenu dans sa position inclinée par l'intermédiaire de deux supports (7 ; 49) qui sont reliés, d'une part, à la plaque d'assise (2) et, d'autre part, aux arêtes latérales (17, 18) du plateau (4).

9. Dispositif d'enlèvement selon la revendication 1, caractérisé en ce que la partie inférieure et la partie supérieure (5, 6) du plateau (4) sont reliées entre elles dans la zone de la fente transversale (10) par l'intermédiaire de charnières (32, 33) et en ce que la partie supérieure (6) est rabattable sur la partie inférieure (5).

10. Dispositif d'enlèvement selon la revendication 8, caractérisé en ce que chacun des deux supports (7) se compose d'une partie inférieure et d'une partie supérieure (8, 9) télescopiques l'une dans l'autre après desserrage de vis (39) qui fixent les extrémités supérieures des supports (7) au plateau (4).

11. Dispositif d'enlèvement selon la revendication 1, caractérisé en ce que la face avant (12) du plateau (4), au-dessous de la fente transversale (10 ; 54) est munie d'une corbeille (36) destinée à recevoir les laminats.

12. Dispositif d'enlèvement selon la revendication 10, caractérisé en ce que la section de la partie supérieure (9) du support (7) est inférieure à la section de la partie inférieure (8) et en ce que la partie supérieure peut coulisser de façon télescopique dans la partie inférieure.

13. Dispositif d'enlèvement selon la revendication 8, caractérisé en ce que chacun des supports (7 ; 49) est relié à la plaque d'assise (2) par l'intermédiaire d'un assemblage articulé (38).

14. Dispositif d'enlèvement selon la revendication 1, caractérisé en ce que le dispositif de séparation (41) présente une face profilée (57) coudée qui se prolonge vers le haut, en ce que la partie coudée de la face profilée (57) est parallèle au plateau (4) oblique et se termine par une arête de détachement (40) arrondie qui s'écarte de la face avant (12) du plateau (4) et en ce que l'élément de maintien forme une brosse (15) située à l'intérieur du dispositif de séparation (41).

15. Dispositif d'enlèvement selon la revendication 14, caractérisé en ce que le dispositif de séparation et maintien (41) présente un profil transversal en forme de caisson et est vissé sur le plateau (4) par l'intermédiaire de deux vis (42), bloquées par un contre-écrou, qui traversent le profil du dispositif de séparation, en ce qu'une rondelle (59) est placée sur chaque vis (42), entre la face avant (12) du plateau et la face profilée contiguë, pour former une fente de 3 à 5 mm entre le plateau (4) et le dispositif de séparation et maintien (41), et en ce qu'une face profilée supérieure (57) du dispositif de séparation et maintien (41) forme un angle β > 90° avec la face profilée (58) contiguë et ménage dans le profil une ouverture (60) orientée vers le plateau (4).

16. Dispositif d'enlèvement selon la revendication 15, caractérisé en ce que, par rapport aux autres faces profilées du dispositif de séparation, la face profilée supérieure (57) est rallongée et coudée.

17. Dispositif d'enlèvement selon la revendication 15, caractérisé en ce que la brosse (15) est fixée sur le côté intérieur de la face profilée supérieure (57) par l'intermédiaire d'une vis de blocage (44) qui traverse un trou longitudinal (45) de la face profilée supérieure (57) et qui peut être bloquée dans le trou longitudinal (45) dans des positions variables, de telle sorte que les poils (16) de la brosse (15), qui sortent de l'ouverture (60), puissent entrer en contact avec les laminats dont les épaisseurs sont variables d'un cas à l'autre.

18. Dispositif d'enlèvement selon la revendication 1, caractérisé en ce que la partie inférieure et la partie supérieure (5, 6) du plateau (4) séparé en deux parties sont reliées entre elles par une articulation (53) fixée sur chacune des deux arêtes latérales (17, 18), et en ce que les vis (34, 35), au-dessus de l'articulation (53), maintiennent les parties (5, 6) dans leur position alignée.

19. Dispositif d'enlèvement selon la revendication 18, caractérisé en ce que l'articulation (53) et les vis (34, 35) sont disposées dans la zone de la fente transversale (54).

20. Dispositif d'enlèvement selon la revendication 19, caractérisé en ce que, dans la zone de la fente transversale (54) sur la face arrière (13) du plateau (4), une charnière (43) relie entre elles les parties inférieure et supérieure du plateau (4).

21. Dispositif d'enlèvement selon la revendication 8, caractérisé en ce que chacun des supports (49) se compose d'une partie supérieure (50) et d'une partie inférieure (51), qui sont reliées entre elles par une articulation (48), en ce qu'une vis (47), au-dessus de l'articulation (48), maintient les deux parties dans leur position alignée et en ce que la partie supérieure (50) est reliée à l'arête latérale (17 ; 18) du plateau (4) par l'intermédiaire de la vis (39).

22. Dispositif d'enlèvement selon la revendication 1, caractérisé en ce que, au-dessus du dispositif de séparation et maintien (41), une cornière (55, 56) est vissée sur la face avant (12) du plateau à proximité de chaque arête latérale (17, 18), et en ce que les extrémités d'une brosse de décharge (46), qui traverse toute la largeur du plateau, sont fixées sur les cornières.
